# EUROPÄISCHE PATENTSCHRIFT

(11) **EP 1 622 093 B1**
(45) Veröffentlichungstag und Bekanntmachung des Hinweises auf die Patenterteilung: **28.11.2007**
(21) Anmeldenummer: 05016138.9
(22) Anmeldetag: 26.07.2005
(51) Int. Cl.: G07C 3/00, G07C 5/00, B60G 17/08, F16F 9/44, F16F 9/52, F16F 9/53, F16F 13/26

(54) **Verfahren und Vorrichtung zur Funktions- und Ausfallüberwachung von hydraulischen Dämpfern in Fahrzeugen, insbesondere von Schwingungsdämpfern in Schienenfahrzeugen**
Method and device for monitoring the operation and malfunction of hydraulic dampers in vehicles, in particular of vibration dampers in rail vehicles
Procédé et dispositif pour la surveillance de fonctionnement et de défaillance d' amortisseurs hydraulique de véhicules, notamment d'amortisseurs de vibrations de véhicules sur rails

(30) Priorität: 28.07.2004 DE 102004036475
(43) Veröffentlichungstag der Anmeldung: 01.02.2006
(73) Patentinhaber: KNORR-BREMSE Systeme für Schienenfahrzeuge GmbH, 80809 München (DE)
(72) Erfinder: Graupe, Sven, 16227 Eberswalde (DE); Ritter, Hans-Jürgen, 12589 Berlin (DE); Wolter, Bernd, 16349 Biesenthal (DE)
(74) Vertreter: Mattusch, Gundula

(56) Entgegenhaltungen:
- EP-A- 1 302 693
- DE-A1- 3 012 786
- US-A- 4 821 852
- US-A1- 2001 030 609
- US-A1- 2003 075 403
- PATENT ABSTRACTS OF JAPAN Bd. 013, Nr. 178 (M-819), 26. April 1989 (1989-04-26) & JP 01 009011 A (FUJI HEAVY IND LTD), 12. Januar 1989 (1989-01-12)

## Beschreibung

### Stand der Technik

Die Erfindung betrifft ein Verfahren und eine Vorrichtung zur Funktions- und Ausfallüberwachung von hydraulischen Dämpfern in Fahrzeugen, insbesondere von Schwingungsdämpfern in Schienenfahrzeugen, gemäß den Oberbegriffen der Patentansprüche 1 und 4.

Aus dem Stand der Technik sind hydraulische Dämpfer von Schienen- und Straßenfahrzeugen bekannt, zur Dämpfung der Schwingungen gefederter Fahrzeugteile, zur Dämpfung von Stößen anschlagender Fahrzeugteile oder zur Dämpfung von Relativbewegungen zwischen Fahrzeugteilen. Im Schienenfahrzeugbereich werden insbesondere Schlingerdämpfer in Drehgestellen von Hochgeschwindigkeitszügen oder Dämpfer an Radpaaren in Niederflurstraßenbahnen eingesetzt. Die Dämpfer ermöglichen eine Erhöhung der Fahrgeschwindigkeit bei Einhaltung der erforderlichen Fahrsicherheit und Erzielung eines möglichst hohen Fahrkomforts.

Dabei kann es vorkommen, dass die Dämpfungswirkung mit der Zeit nachlässt oder der Dämpfer sogar vollständig ausfällt, was vom Fahrzeugführer oft nicht erkannt wird, was aber die Fahrsicherheit stark beeinträchtigt. So kann z.B. das Versagen eines Schwingungsdämpfers eines Schienenfahrzeugs bei hohen Geschwindigkeiten zum Entgleisen führen.

Ein gattungsgemäßes Verfahren bzw. eine gattungsgemäße Vorrichtung sind aus der DE 30 12 786 A1 bekannt. Dort wird bei einem Viskositätsschwingungsdämpfer unter anderem die Temperatur des Dämpfer-Siliconöls gemessen.

Aufgabe der Erfindung ist es, das gattungsgemäße Verfahren und die gattungsgemäße Vorrichtung zur Funktionsüberwachung von hydraulischen Dämpfern in Fahrzeugen derart weiter zu bilden, dass ein Dämpferschaden zuverlässiger erkannt werden kann.

Diese Aufgabe wird durch die in den Patentansprüchen 1 und 4 angegebenen Merkmale gelöst.

### Vorteile der Erfindung

Die Erfindung basiert auf dem Gedanken, dass ein hydraulischer Dämpfer mechanische Energie in Wärme umwandelt und bei einem intakten Dämpfer deshalb die Dämpfertemperatur ansteigt. Im Schadensfall ist die Dämpfertemperatur demgegenüber niedriger als bei intaktem Dämpfer. Da jedoch die Dämpfertemperatur durch die Außentemperatur beeinflusst wird, zieht das erfindungsgemäße Verfahren nach Patentanspruch 1 eine von der Dämpfertemperatur wenigstens eines Bauteils und/oder des hydraulischen Druckmittels des Dämpfers und der Außentemperatur abhängige Kenngröße als Maß für die Funktionsfähigkeit des Dämpfers heran. Damit kann der Einfluss der Außentemperatur eliminiert werden. Bei Abweichung dieser Kenngröße von einem vorgegebenen Sollwert oder Sollwertbereich wird dann ein Schadenssignal erzeugt.

Bei der entsprechenden Vorrichtung gemäß Patentanspruch 3 wird ein Außentemperatursensor zur Messung der Außentemperatur, ein Dämpfertemperatursensor zur Messung der Dämpfertemperatur wenigstens eines Bauteils und/oder des hydraulischen Druckmittels des Dämpfers sowie eine Auswerteelektronik vorgesehen, welche die von der Außentemperatur und der Dämpfertemperatur abhängige Kenngröße bestimmt und bei Abweichung dieser Kenngröße von einem vorgegebenen Sollwert oder Sollwertbereich ein Schadenssignal erzeugt.

Mit den genannten Maßnahmen ist eine kostengünstige, bauraumsparende und zuverlässige Funktionsüberwachung und Ausfallerkennung von Dämpfern möglich

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt wird als Kenngröße die Temperaturdifferenz zwischen der Dämpfertemperatur wenigstens eines Bauteils und/oder des hydraulischen Druckmittels des Dämpfers und der Außentemperatur herangezogen, um den Einfluss der Außentemperatur zu eliminieren.

Der Außentemperatursensor kann an oder in einem Gehäuse der Auswerteelektronik angeordnet sein. Dann kann das Gehäuse als Modul ohne weiteren Verkabelungsaufwand vorgefertigt und an dem Dämpfer angebracht werden.

Gemäß einer weiteren Maßnahme wird zwischen dem Gehäuse der Auswerteelektronik und dem Dämpfer eine Wärmeisolierschicht vorgesehen. Diese verhindert, dass das Gehäuse die Temperatur des Dämpfers durch Wärmeleitung annimmt und das Messergebnis beeinflusst wird.

Bevorzugt ist der Dämpfertemperatursensor an oder in dem Gehäuse der Auswerteelektronik gehalten und kontaktiert den Dämpfer oder ist mit geringem Abstand zu ihm angeordnet. Insbesondere ist der Dämpfertemperatursensor stabförmig ausgebildet, einendseitig an der Auswerteelektronik gehalten und ragt anderendseitig in eine Bohrung des Dämpfers. Dann ist das vorfertigbare Modul bestehend aus Außentemperatursensor, Auswerteelektronik und Dämpfertemperatursensor als komplette Einheit am Dämpfer montierbar.

An dem Gehäuse der Auswerteelektronik ist vorzugsweise eine Steckverbindung für ein Kabel vorgesehen, welches die Auswerteelektronik mit einer Anzeigeeinrichtung verbindet. Die Anzeigeeinrichtung kann das Schadenssignal dem Fahrzeugführer optisch und/oder akustisch anzeigen.

### Zeichnungen

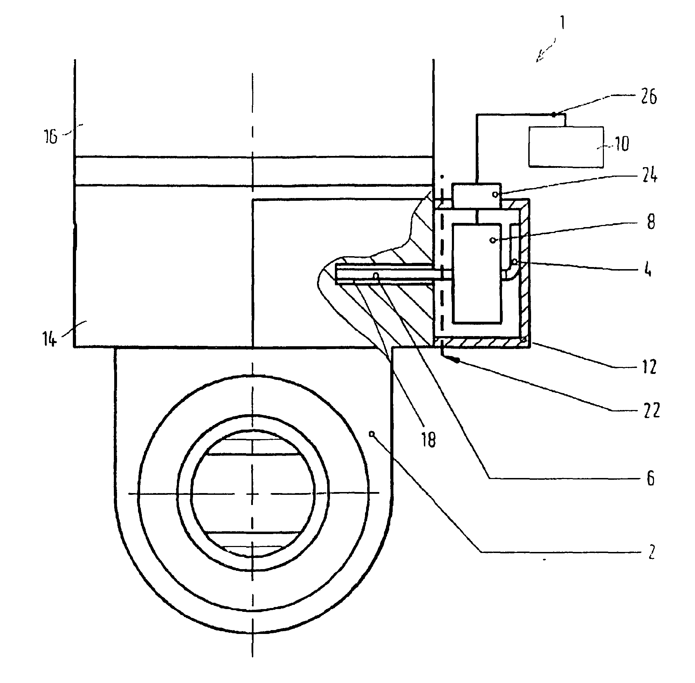

Nachstehend ist ein Ausführungsbeispiel der Erfindung in der Zeichnung dargestellt und in der nachfolgenden Beschreibung näher erläutert. In der Zeichnung zeigt die einzige Figur eine Teilquerschnittsdarstellung einer Vorrichtung zur Funktions- und Ausfallüberwachung von hydraulischen Dämpfern in Fahrzeugen gemäß einer bevorzugten Ausführungsform der Erfindung.

### Beschreibung des Ausführungsbeispiels

Die in der Figur insgesamt mit 1 bezeichnete Vorrichtung dient gemäß einer bevorzugten Ausführungsform zur Funktions- und Ausfallüberwachung eines hydraulischen Schwingungsdämpfers 2 in einem Schienenfahrzeug. Der Aufbau eines solchen Schwingungsdämpfers 2, beispielsweise ein Teleskopschwingungsdämpfer ist hinlänglich bekannt, deshalb soll hier nicht weiter darauf eingegangen werden.

Die Vorrichtung umfasst:
- einen Außentemperatursensor 4 zur Messung der Außentemperatur,
- einen Dämpfertemperatursensor 6 zur Messung der Dämpfertemperatur wenigstens eines Bauteils und/oder eines Abschnitts 14 und/oder des hydraulischen Druckmittels des Schwingungsdämpfers 2,
- eine Auswerteelektronik 8, welche eine von der Außentemperatur und der Dämpfertemperatur abhängige Kenngröße bestimmt und bei Abweichung dieser Kenngröße von einem vorgegebenen Sollwert oder Sollwertbereich ein Schadenssignal erzeugt,
- eine Anzeigeeinrichtung 10, die das Schadenssignal optisch und/oder akustisch anzeigt.

Besonders bevorzugt wird als Kenngröße die Temperaturdifferenz zwischen der Dämpfertemperatur wenigstens eines Bauteils und/oder eines Abschnitts und/oder des hydraulischen Druckmittels des Dämpfers und der Außentemperatur herangezogen. Die Kenngröße ist jedoch nicht auf diese Temperaturdifferenz beschränkt, vielmehr kann aus den genannten Temperaturen jegliche andere Kenngröße gebildet werden, mit welcher der Einfluss der Außentemperatur eliminiert wird.

Der stabförmige Dämpfertemperatursensor 6 liefert ein elektrisches, von der Temperatur des Dämpfers 2 abhängiges Signal an eine Auswerteelektronik 8, beispielsweise dadurch, dass er und seine elektrischen Kontakte endseitig mit ihr vergossen sind. Er ragt vorzugsweise seitlich aus einer beispielsweise offenen Seitenfläche eines Gehäuses 12 heraus, in welcher die Auswerteelektronik 8 untergebracht und welches vorzugsweise an einer Seitenfläche eines Bodenstücks 14 gehalten ist, das mit einem Dämpferrohr 16 verbunden ist. Das Bodenstück 14 und das Dämpferrohr 16 sind beispielsweise integrale Bestandteile des Schwingungsdämpfers 2. Dadurch kann der aus dem Gehäuse 12 hervorstehende Dämpfertemperatursensor 6 beispielsweise seitlich in eine Sackbohrung 18 des Bodenstücks 14 hineinragen, deren Durchmesser geringfügig größer ist als der des Dämpfertemperatursensor 6. Das Bodenstück 14 steht mit dem Dämpferrohr 16 des Schwingungsdämpfers 2 in wärmeleitender Verbindung. Im Betrieb werden diese Abschnitte 14, 16 durch die Hydraulikflüssigkeit im Inneren des Schwingungsdämpfers 2 erwärmt.

Alternativ könnte der Dämpfertemperatursensor 6 mit jeglichem anderen Bauteil oder auch direkt mit der Hydraulikflüssigkeit in wärmeleitender Verbindung stehen. Anstatt oder zusätzlich kann eine Wärmeübertragung zwischen dem Dämpfertemperatursensor 6 und dem Schwingungsdämpfer 2 auch mittels Konvektion und/oder Wärmestrahlung stattfinden.

Zwischen dem Gehäuse 12 der Auswerteelektronik und dem Bodenstück 14 des Schwingungsdämpfers 2 ist vorzugsweise eine Wärmeisolierschicht 22 vorgesehen, die verhindert, dass das Gehäuse 12 der Auswerteelektronik 8 die Temperatur des Bodenstücks 14 annimmt und das Messergebnis verfälscht. Der Dämpfertemperatursensor 6 ragt dann durch eine Durchgangsöffnung in der Wärmeisolierschicht 22 hindurch.

Weiterhin ist an dem Gehäuse 12 der Auswerteelektronik 8 eine Steckverbindung 24 zum Anstecken eines Signalkabels 26 vorgesehen, das die Auswerteelektronik 8 mit der Anzeigeeinrichtung 10 verbindet, die das von der Auswertelektronik 8 erzeugte Schadenssignal dem Fahrzeugführer optisch und/oder akustisch anzeigt.

### Bezugszeichenliste

- 1: Vorrichtung
- 2: Schwingungsdämpfer
- 4: Außentemperatursensor
- 6: Dämpfertemperatursensor
- 8: Auswerteelektronik
- 10: Anzeigeeinrichtung
- 12: Gehäuse
- 14: Bodenstück
- 16: Dämpferrohr
- 18: Sackbohrung
- 22: Wärmeisolierschicht
- 24: Steckverbindung
- 26: Signalkabel

## Patentansprüche

1. Verfahren zur Funktions- und Ausfallüberwachung von hydraulischen Dämpfern in Fahrzeugen, insbesondere von Schwingungsdämpfern (2) in Schienenfahrzeugen, wobei die Dämpfertemperatur wenigstens eines Bauteils oder Abschnitts (14, 16) und/oder des hydraulischen Druckmittels des Dämpfers (2) gemessen wird, **dadurch gekennzeichnet, dass** zusätzlich die Außentemperatur gemessen und aus der Dämpfertemperatur und der Außentemperatur eine Kenngröße bestimmt und bei Abweichung dieser Kenngröße von einem vorgegebenen Sollwert oder Sollwertbereich ein Schadenssignal erzeugt wird.

2. Verfahren nach Anspruch 1, **dadurch gekennzeichnet, dass** als Kenngröße die Temperaturdifferenz zwischen der Dämpfertemperatur und der Außentemperatur bestimmt wird.

3. Verfahren nach Anspruch 1 oder 2, **dadurch gekennzeichnet, dass** das Schadenssignal optisch und/oder akustisch angezeigt wird.

4. Vorrichtung zur Funktionsüberwachung von hydraulischen Dämpfern in Fahrzeugen, insbesondere von Schwingungsdämpfern (2) in Schienenfahrzeugen, mit einem Dämpfertemperatursensor (6) zur Messung der Dämpfertemperatur wenigstens eines Bauteils oder Abschnitts (14, 16) und/oder des hydraulischen Druckmittels des Dämpfers (2), **gekennzeichnet durch**
- einen Außentemperatursensor (4) zur Messung der Außentemperatur,
- eine Auswerteelektronik (8), welche eine von der Außentemperatur und der Dämpfertemperatur abhängige Kenngröße bestimmt und bei Abweichung dieser Kenngröße von einem vorgegebenen Sollwert oder Sollwertbereich ein Schadenssignal erzeugt.

5. Vorrichtung nach Anspruch 4, **dadurch gekennzeichnet, dass** die Auswerteelektronik (8) derart ausgebildet ist, dass sie als Kenngröße die Temperaturdifferenz zwischen der Dämpfertemperatur und der Außentemperatur bestimmt.

6. Vorrichtung nach Anspruch 4 oder 5, **dadurch gekennzeichnet, dass** der Außentemperatursensor (4) an oder in einem Gehäuse (12) der Auswerteelektronik (8) angeordnet ist.

7. Vorrichtung nach Anspruch 6, **dadurch gekennzeichnet, dass** das Gehäuse (12) der Auswerteelektronik (8) im Bereich des Dämpfers (2) gehalten und zwischen dem Gehäuse (12) und dem Dämpfer (2) eine Isolierschicht (22) vorgesehen ist.

8. Vorrichtung nach Anspruch 7, **dadurch gekennzeichnet, dass** der Dämpfertemperatursensor (6) an oder in dem Gehäuse (12) der Auswerteelektronik (8) gehalten und den Dämpfer (2) kontaktiert oder mit geringem Abstand zu ihm angeordnet ist.

9. Vorrichtung nach Anspruch 8, **dadurch gekennzeichnet, dass** der Dämpfertemperatursensor (6) stabförmig ausgebildet ist, einendseitig an der Auswerteelektronik (8) gehalten und anderendseitig in eine Bohrung des Dämpfers (2) ragt.

10. Vorrichtung nach wenigstens einem der Ansprüche 6 bis 9, **dadurch gekennzeichnet, dass** an dem Gehäuse (12) der Auswerteelektronik (8) eine Steckverbindung (24) für ein Signalkabel (26) vorgesehen ist, welches die Auswerteelektronik (8) mit einer Anzeigeeinrichtung (10) verbindet.

11. Vorrichtung nach Anspruch 10, **dadurch gekennzeichnet, dass** die Anzeigeeinrichtung (10) das Schadenssignal optisch und/oder akustisch anzeigt.

## Claims

1. Method of monitoring hydraulic dampers in vehicles, in particular vibration dampers (2) in rail vehicles, for proper functioning and failure, wherein the damper temperature of at least one component or section (14, 16) and/or of the hydraulic compressed medium of said damper (2) is measured, **characterised in that** additionally the outside temperature is measured and that a characteristic magnitude is established from the damper temperature and the outside temperature and that in the event of deviation of this characteristic magnitude a damage signal is generated from a predetermined rated value or rated range of values.

2. Method according to Claim 1, **characterised in that** the temperature difference between the damper temperature and the outside temperature is established as characteristic magnitude.

3. Method according to Claim 1 or 2, **characterised in that** said damage signal is visually and/or audibly displayed.

4. Device for monitoring hydraulic dampers in vehicles, in particular vibration dampers (2) in rail vehicles, for proper functioning, comprising a damper temperature sensor (6) for measuring the damper temperature of at least one component or section (14, 16) and/or of the hydraulic compressed medium of said damper (2), **characterised by**
- an outside temperature sensor (4) for measuring the outside temperature,
- an electronic evaluation unit (8) that establishes a characteristic magnitude dependent on the outside temperature and the damper temperature and generates a damage signal when this characteristic magnitude deviates from a predetermined rated value or rated range of values.

5. Device according to Claim 4, **characterised in that** said electronic evaluation unit (8) is so configured that it establishes the temperature difference between the damper temperature and the outside temperature as characteristic magnitude.

6. Device according to Claim 4 or 5, **characterised in that** said outside temperature sensor (4) is disposed on or in a housing (12) of said electronic evaluating unit (8).

7. Device according to Claim 6, **characterised in that** said housing (12) of said electronic evaluating unit (8) is retained in the region of the damper (2) and that an isolating layer is provided between said housing (12) and said damper (2).

8. Device according to Claim 7, **characterised in that** said damper temperature sensor (6) is retained on or in said housing (12) of said electronic evaluating unit (8) and contacts said damper (2) or disposed at a short distance from the latter.

9. Device according to Claim 8, **characterised in that** said damper temperature sensor (6) presents a rod-shaped configuration, is retained, on the side of one end, on said electronic evaluating unit (8) and projects, on the side of the other end, into a bore of said damper (2).

10. Device according to at least one of the Claims 6 to 9, **characterised in that** a plug-and-socket connector (24) is provided for a signal cable (26) on said housing (12), which cable connects said electronic evaluating unit (8) to a display means (10).

11. Device according to Claim 10, **characterised in that** said display means (10) displays said damage signal visually and/or audibly.

## Revendications

1. Procédé à surveiller des amortisseurs hydrauliques dans des véhicules, en particulier des amortisseurs de vibrations (2) de véhicules sur rails, en vue de leur fonctionnement correct et de défaillance, dans lequel la température d'amortisseur d'au moins un composant ou d'une partie (14, 16) et/ou du milieu hydraulique comprimé dudit amortisseur (2) est mesurée, **caractérisé en ce qu'**au plus, la température extérieure est mesurée, et **en ce qu'**un paramètre caractéristique est déterminé de la température d'amortisseur et la température extérieure, et **en ce qu'**au cas d'un écart de ce paramètre caractéristique, un signal de dégât est engendré d'une valeur de consigne prédéterminée ou d'une gamme de valeurs de consigne.

2. Procédé selon la revendication 1, **caractérisé en ce que** la différence de température entre la température d'amortisseur et la température extérieure est détectée en tant que paramètre caractéristique.

3. Procédé selon la revendication 1 ou 2, **caractérisé en ce que** ledit signal de dégât est affiché sous forme visuelle ou audible.

4. Dispositif à surveiller des amortisseurs hydrauliques dans des véhicules, en particulier des amortisseurs de vibrations (2) de véhicules sur rails, en vue de leur fonctionnement correct, comprenant un palpeur de température d'amortisseur (6) à mesurer la température d'amortisseur d'au moins un composant ou d'une partie (14, 16) et/ou du milieu hydraulique comprimé dudit amortisseur (2), **caractérisé par**
- un palpeur de température extérieure (4) à mesurer la température extérieure,
- une unité électronique d'évaluation (8), qui détecte un paramètre caractéristique dépendant de la température extérieure et la température d'amortisseur et engendre un signal de dégât, quand ce paramètre caractéristique s'écarte d'une valeur de consigne prédéterminée ou d'une gamme de valeurs de consigne.

5. Dispositif selon la revendication 4, **caractérisé en ce que** ladite unité électronique d'évaluation (8) est configurée d'une telle manière, qu'elle détecte la différence de température entre la température d'amortisseur et la température extérieure en tant que le paramètre caractéristique.

6. Dispositif selon la revendication 4 ou 5, **caractérisé en ce que** ledit palpeur de température extérieure (4) est disposé à ou dans un carter (12) de ladite unité électronique d'évaluation (8).

7. Dispositif selon la revendication 6, **caractérisé en ce que** ledit carter (12) de ladite unité électronique d'évaluation (8) est retenu dans la zone de l'amortisseur (2), et **en ce qu'**une couche isolante est formée entre ledit carter (12) et ledit amortisseur (2).

8. Dispositif selon la revendication 7, **caractérisé en ce que** ledit palpeur de température d'amortisseur (6) est retenu à ou dans ledit carter (12) de ladite unité électronique d'évaluation (8), qui se trouve en contact avec ledit amortisseur (2) ou est écarté du dernier par une courte distance.

9. Dispositif selon la revendication 8, **caractérisé en ce que** ledit palpeur de température d'amortisseur (6) présente une configuration en barre, est retenu, du côté d'une extrémité, à ladite unité électronique d'évaluation (8) et fait saillie, du côté de l'autre extrémité, dans un alésage dudit amortisseur (2).

10. Dispositif selon au moins une des revendications 6 à 9, **caractérisé en ce qu'**une connexion mâle-femelle (24) est disposée pour un câble de signalisation (26) audit carter (12), ce câble reliant ladite unité électronique d'évaluation (8) à un moyen d'affichage (10).

11. Dispositif selon la revendication 10, **caractérisé en ce que** ledit moyen d'affichage (10) affiche ledit signal de dégât sous forme visuelle ou audible.
